# EUROPEAN PATENT SPECIFICATION

(11) **EP 0 549 338 B1**
(45) Date of publication and mention of the grant of the patent: **30.07.1997**
(21) Application number: 92311750.1
(22) Date of filing: 23.12.1992
(51) Int. Cl.: C08G 18/40, C08L 59/00

(54) **Polyacetal resin composition**
Polyacetalharzzusammensetzung
Composition de résine de polyacétale

(30) Priority: 27.12.1991 JP 346780/91
(43) Date of publication of application: 30.06.1993
(73) Proprietor: POLYPLASTICS CO. LTD., Chuo-Ku Osaka-shi Osaka 541 (JP)
(72) Inventor: Katsumata, Tohru, Fuji-shi, Shizuoka (JP); Matsunaga, Noboyuki, Fuji-shi, Shizuoka (JP)
(74) Representative: Tebbit, Antony Hugh Edward

(56) References cited:
- EP-A- 0 397 493
- FR-A- 2 110 417
- JP-A-61 148 221
- US-A- 3 364 157
- PATENT ABSTRACTS OF JAPAN vol. 10, no. 345 (C-386)20 November 1986 & JP-A-61 148 221

## Description

The present invention relates to a polyacetal resin composition having reduced surface gloss. More particularly, the present invention is concerned with a polyacetal resin composition which comprises a polyacetal resin and, incorporated therein, a specified polyester and a specified isocyanate, isothiocyanate or modification thereof. The invention further provides from the said resin composition a molding having a remarkably lowered surface gloss while maintaining the mechanical properties and moldability inherent in polyacetals.

As is well known, polyacetal resins are used in a very wide range of fields as engineering resins by virtue of their excellent physical, mechanical and electrical properties or chemical properties such as chemical resistance and heat resistance. With expansion of the fields of utilization of polyacetal resins, however, there are instances in which the resin is required to have more specialized properties. One such requirement is a reduction in the surface gloss of moldings produced from the resin. For example, in the fields of the interior and exterior furnishings of automobiles, and optical instruments, a polyacetal resin having a low gloss, that is, being less reflective, may be required for the purpose of preventing stimulation to the eye by the reflected light, so as to achieve a high quality appearance, and to prevent malfunction of devices due to the reflected light.

Further, in the fields of general electrical appliances and building materials, there is an ever-increasing opportunity for using the polyacetal resin in combination with various materials according to the required end-duty. Since, however, polyacetal resins have higher surface gloss than other general resin materials, they tend to give a product with unduly high surface gloss when combined with other materials, so that the use of the combined product is somewhat restricted in fields where importance is attributed to the surface appearance.

The addition of an inorganic filler, such as calcium carbonate, talc or calcium silicate, to a polyacetal resin is known as a method for meeting this requirement. (See for example our Japanese Patent Specification No 1-170641.) In such a method, however, it is necessary in order to attain the desired effect of reducing the gloss, to incorporate a large amount of talc or other substance, and this has the effect of harming the resin's mechanical properties, particularly elongation and toughness, so that the application of a stress during the post-working or assembling of the molding or an impact due to dropping during handling of the molding causes the molding to be easily broken.

In a different field, for the purpose of obtaining improved impact resistance, Japanese Patent publication No 61-148221 proposes to form an acetal resin composition by incorporating (A) a resin composition consisting of (I) 40-99.5wt% acetal resin and (ii) 60-0.5wt% thermoplastic polyester elastomer with (B) 0.01-5wt% iso(thio)cyanate compound, e.g. toluene diisocyanate. For example an elastomer containing polybutylene terephthalate and polybutylene isophthalate as short chain ester units and polyoxy(tetramethylene)glycol terephthalate and polyoxy(tetramethylene)glycol isophthalate as long chain ester units, is used as the component (ii).

The graining of the surface of a mold followed by the transfer of the grain to the surface of a molding is generally used for the purpose of reducing the surface gloss. In the case of polyacetal resins, however, no satisfactory effect is presently attained by such means because the surface gloss is high and the transferability of the grain to the molding is poor, probably due to high crystallinity of the polyacetal resin.

Accordingly, the development of an acetal resin material having excellent mechanical properties and reduced surface gloss while enjoying excellent moldability has been desired in the art.

The present inventors have found that the addition of both a specified polyalkylene terephthalate copolymer and a specified isocyanate compound is effective in significantly reducing surface gloss, which has led to the completion of the present invention.

Thus, the present invention is directed to a moldable polyacetal resin composition which when molded has a surface gloss of 20% or less (measured as described in the specification) and which comprises:
(A) 100 parts by weight of a polyacetal resin and, incorporated therein,
(B) 1 to 50 parts by weight of a polyalkylene terephthalate copolymer having a melt flow temperature of 210°C or below measured as herein specified, and
(C) 0.1 to 10 parts by weight of an isocyanate or isothiocyanate compound, or a derivative thereof which is active as a compatibilizer for components (A) and (B),
wherein the acid component constituting the polyalkylene terephthalate copolymer as the component (B) is composed of 100 to 50 mole % terephthalic acid and 0 to 50 mole % of at least one of isophthalic, naphthalenedicarboxylic and adipic acids, and
wherein the diol component constituting the polyalkylene terephthalate copolymer as the component (B) is 1,4-butanediol, or ethylene glycol, or wherein part of such 1,4-butanediol or ethylene glycol is replaced by at least one of ethylene glycol (when use is made of 1,4-butanediol), diethylene glycol and 1,4-cyclohexanedimethylol.

The invention further comprises a molding formed of the said composition.

Components constituting the polyacetal resin composition according to the present invention will now be described in detail.

The polyacetal resin to be used as the component (A) in the present invention is a polymeric compound comprising an oxymethylene group (-CH₂0-) as the major constituent unit and may be any of a polyoxymethylene homopolymer and a copolymer, a terpolymer and a block copolymer containing a minor amount of other constituent unit besides the oxymethylene unit, and the molecule may have not only a linear structure but also a branched or crosslinked structure. There is no particular limitation on the degree of polymerization.

The polyalkylene terephthalate copolymer to be used as the component (B) in the present invention is a polyester which is produced by subjecting an acid component comprising 100 to 50% by mole of terephthalic acid and 0 to 50% by mole of a specific aliphatic dicarboxylic acid having 6 or more carbon atoms or an aromatic dicarboxylic acid other than terephthalic acid to copolycondensation with an alkylenediol component having 2 to 8 carbon atoms and has a melt flow temperature of 210°C or below.

The acid components other than terephthalic acid which may be used are adipic, isophthalic and naphthalenedicarboxylic acids.

Further, it is also possible to use these dicarboxylic acid components in polymerization in the form of a derivative thereof capable of forming an ester, for example, a lower alcohol ester such as a dimethyl ester. These acid components may be used as a mixture of two or more of them.

The alkylenediols having 2 to 8 carbon atoms to be used herein are 1,4-butanediol and ethylene glycol. These alkylenediols may be used alone or as a mixture of 1,4-butanediol and ethylene glycol, or of either of them with diethylene glycol, or 1,4-cyclohexanedimethylol.

The polyalkylene terephthalate polymer to be used as the component (B) in the present invention is a copolyester which is produced by copolymerizing the above acid component with the above diol component and has a melt flow temperature of 210°C or below, preferably 190°C or below. When the melt flow temperature is above 210°C, it becomes difficult to conduct kneading and the resultant composition cannot exhibit a satisfactory effect. Any polyalkylene terephthalate can be used as the component (B) of the present invention as far as the melt flow temperature is 210°C or below.

Examples of the component (B) include a copolyester prepared from an acid component comprising terephthalic acid partially replaced by at least one member selected from isophthalic, naphthalenedicarboxylic and adipic acids, and a diol component comprising 1,4-butanediol, ethylene glycol or a diol component partially replaced by at least one member selected among ethylene glycol (in the case of the use of 1,4-butanediol), diethylene glycol and 1,4-cyclohexanedimethylol. A particularly preferred copolyester is one produced by copolymerizing an acid component comprising 90 to 60% by mole of terephthalic acid and 10 to 40% by mole of isophthalic acid with a diol component comprising a mixture of 1,4-butanediol and/or ethylene glycol with 1,4-cyclohexanedimethylol.

There is no particular limitation on the intrinsic viscosity (IV) of the copolyester resin. However, in order to attain a good dispersed state, it is preferred to select the intrinsic viscosity in such a manner that the melt viscosity of the copolyester at the melt kneading temperature is as close as possible to the melt viscosity of the polyacetal. Therefore, the intrinsic viscosity is preferably 0.3 to 1.2, particularly preferably 0.4 to 0.8. The intrinsic viscosity as specified herein is measured through the use of a phenol/tetrachloroethane mixture as the solvent at 40°C according to a conventional method.

The amount of incorporation of the polyalkylene terephthalate copolymer as the component (B) is 1 to 50 parts by weight, preferably 5 to 40 parts by weight, based on 100 parts by weight of the polyacetal resin as the component (A). When the amount of the component (B) is excessively small, no satisfactory effect of reducing the surface gloss can be attained. On the other hand, the addition of the component (B) in an excessive amount has an adverse effect on the mechanical properties and heat stability and renders the extrudability of the composition poor.

Although the incorporation of the polyalkylene terephthalate copolymer as the component (B) in the polyacetal resin as the component (A) serves to lower the surface gloss of the resultant molding, it has a drawback that the extrudability is poor and the surface of the molding becomes heterogeneous. The present invention is also characterized in that an isocyanate or isothiocyanate compound or a modification thereof as the component (C) is incorporated in addition to the components (A) and (B). The incorporation contributes to an improvement in the extrudability and, at the same time, can provide a molding having a uniformly lowered surface gloss and maintain well-balanced properties of the polyacetal resin.

The isocyanate or isothiocyanate compound or the modification thereof to be used as the component (C) in the present invention may be a monomer, dimer or trimer. It is preferably a compound represented by the general formula O=C=N-R-N=C=O or S=C=N-R-N=C=S (wherein R represents a divalent group), or a modification thereof.

Suitable examples of the component (C) include 4,4'-methylenebis(phenylisocyanate), 2,4-tolylene diisocyanate, 2,6-tolylene diisocyanate, xylene diisocyanate, 1,6-hexamethylene diisocyanate, isophorone diisocyanate, 1,5-naphthalene diisocyanate, corresponding diisothiocyanates, their dimers and trimers, and compounds having an isocyanate group (-NCO) protected by some means. However, when various properties, such as the extent of discoloration during melt treatment and safety in handling, are taken into consideration, it is preferred to use 4,4'-methylenebis(phenyl isocyanate), isophorone diisocyanate, 1,5-naphthalene diisocyanate, 1,6-hexamethylene diisocyanate, 2,4-tolylene diisocyanate and 2,6-tolylene diisocyanate and modifications (or derivatives) thereof such as dimers and trimers.

The presence of the isocyanate or isothiocyanate compound as the component (C) during melt kneading serves to bring about a uniform surface state with smoothness and low gloss and, at the same time, contributes to an enhancement in strength and rigidity.

From the viewpoint of an increase in viscosity, this effect is believed to derive from a reaction of the component (C) with the polyacetal resin as the component (A) and/or the polyester resin as the component (B) during the melt treatment which enhances the affinity between the components (A) and (B) and, at the same time, compatibilizes the components (A) and (B) with each other, or improves adhesion at the interface.

The amount of incorporation of the isocyanate or isothiocyanate compound or the modification thereof as the component (C) is 0.1 to 10 parts by weight, preferably 0.3 to 5 parts by weight, based on 100 parts by weight of the polyacetal resin. When the amount of the component (C) is excessively small, the extrudability, uniformity of gloss, etc., are unsatisfactory. On the other hand, the addition of the component (C) in an excessive amount hinders the kneading operation.

The surface gloss of a molding of the composition of the present invention is preferably 20% or less, most preferably 15% or less, in terms of the glossiness as determined by the method which will be described hereinafter from the practical viewpoint. With the sophistication of the interior furnishings of automobiles in recent years or in order to improve the touch, most of the interior parts are subjected to graining called "leather graining" or "satin graining", so that it becomes necessary to lower the gloss on the mirror-finished surface and impart a high transferability to the grained surface. In the composition of the present invention, the modification of the surface of the polyacetal resin significantly lowers the gloss of the mirror-finished surface and, at the same time, contributes to a significant improvement in the transferability to the grained surface, so that the gloss on the grained surface is further lowered.

It is preferable to add various known stabilizers to the composition of the present invention to enhance its heat stability. For this purpose, it is preferred to use known antioxidants, nitrogen compounds, alkali or alkaline earth metal compounds or other compounds alone or as a mixture of two or more of them.

Further, in the composition of the present invention, it is also possible to add various types of carbon black or other dyes and pigments to give a given colour to the composition.

At least one known additive selected from, for example, slip additives, nucleating agents, release agents, antistatic agents and other additives such as surfactants, weathering stabilizers, organic polymer materials other than the component (B) and inorganic and organic reinforcements may be added to the composition of the present invention for the purpose of imparting desired properties to the composition according to its required duty.

The compositions of the present invention can be prepared by using facilities and methods generally employed in the preparation of synthetic resin compositions. Specifically, necessary components may be mixed, and kneaded and extruded on a single- or twin-screw extruded to provide pellets for molding. It is also possible to prepare the composition on a moldering machine simultaneously with molding. In order to enhance the effect of the present invention, it is preferred to employ methods such as one wherein part or the whole of the resin components is pulverized, mixed and melt-extruded for the purpose of improving the dispersion and blending of individual components, thereby providing pellets and one wherein part of the components constituting the composition (for example, part of each of the components (A) and (C)) are preliminarily subjected to a melt kneading treatment (a master batch) and the melt-kneaded material is further kneaded with the remaining components to give a composition comprising desired components or a molding thereof.

The above compounding components such as stabilizers and additives may be added at any stage, and it is a matter of course that they may be added and mixed immediately before a final molding is obtained.

The resin compositions according to the present invention can be molded by any of extruding, injection molding, compression molding, vacuum molding, blow molding and foam molding methods.

Although the composition or molding according to the present invention has, as such, excellent properties as described above, the heat treatment at a temperature of 80°C or above after the preparation of the composition or molding is useful for further improving and stabilizing the properties.

As is apparent from the foregoing description, the composition of the present invention comprising a polyacetal resin and, incorporated therein, a specified polyalkylene terephthalate copolymer and a specified isocyanate compound has excellent extrudability and moldability and exhibits significant improvements in lowering the surface gloss of a molding to form a surface with calmness while maintaining the well-balanced mechanical properties of the polyacetal.

Therefore, the polyacetal resin composition having a low gloss according to the present invention can be advantageously used in applications where a high quality is required and light reflection is unfavourable such as the interior furnishings of automobiles (for example, regulator handles, interior clips and ventilator knobs), optical instruments, building materials and domestic articles.

### [Examples]

The present invention will be described in more detail with reference to the following non-limiting Examples. In these Examples and Comparative Examples, the term "parts" is by weight in all cases. The surface state and mechanical properties are those evaluated by the following methods.

### (1) Extrudability

The extrudability was evaluated according to the following ranks 1 to 3, the smaller the numeral, the better the extrudability:
- 1...: extruding can be easily conducted by a conventional method;
- 2...: it is difficult to conduct extruding, and a strand is liable to break;
- 3...: it is impossible to conduct extruding.

### (2) Surface state and appearance of molding

The surface state was evaluated in terms of the matte state and the uniformity of the surface of the molding according to the following ranks 1 to 4, the smaller the numeral, the better the uniformity and the matte state:
- 1...: the surface is uniform, and the matte state is good;
- 2...: although the surface luster is lowered, the surface is non-uniform in the unevenness and is roughened;
- 3...: the surface is non-uniformly mottled, that is, has matte parts and lustrous parts;
- 4...: the surface luster is scarcely lowered, or the surface is largely mottled and there are many parts where the luster is not lowered.

### (3) Surface glossiness

A test piece (70 mm x 40 mm x 3 mm in thickness) molded under the following conditions on a mold having a mirror surface was subjected to the measurement of the glossiness in 45°-45° reflection with a digital variable-angle gloss meter (UGV-40 manufactured by Suga Test Instruments Co., Ltd.) according to the glossiness measuring method as specified in JIS K 7105.

* Molding machine: IS80 manufactured by Toshiba Corp.
* Molding conditions:

| | Nozzle | C1 | C2 | C3 |
|---|---|---|---|---|
| Cylinder temp. (°C) | 200 | 190 | 180 | 160 |
| Injection pressure | 650 kg/cm²⁺ | (63.74 MPa) | | |
| Injection rate | 1.0 (m/min) | | | |
| Mold temp. | 80 (°C) | | | |
| ⁺ 1 kg/cm² = 98.06 kPa | | | | |

### (4) Tensile test and bending test

The tensile strength and elongation and bending strength were measured according to ASTM D638.

### (5) Melt flow temperature:

Pellets were packed in a flow tester (manufactured by Shimadzu Corp.) provided with a nozzle having a diameter of 1 mm, and the temperature was raised under a load of 500 kg to measure the temperature at which the flow began.

### Examples 1 to 13

Various polyesters and various isocyanate compounds were blended with the polyacetal resin as the component (A) according to the formulation specified in Table 1, mixed on a Henschel mixer and melt-kneaded on a 30-mm, twin-screw extruder to give a composition in pellet form. The pellets were then molded into a test piece on an injection molding machine under the above-described molding conditions. The test piece was subjected to the measurement of gloss and other properties to evaluate their properties. The results are given in Table 1.

### Comparative Examples 1 to 11

As given in Table 2, a composition comprising a polyacetal resin as the component (A) alone and compositions comprising a polyacetal resin and, added thereto, either a polyester as the component (B) or an isocyanate compound as the component (C) were prepared in the same manner as that of the Example 1 and then evaluated.

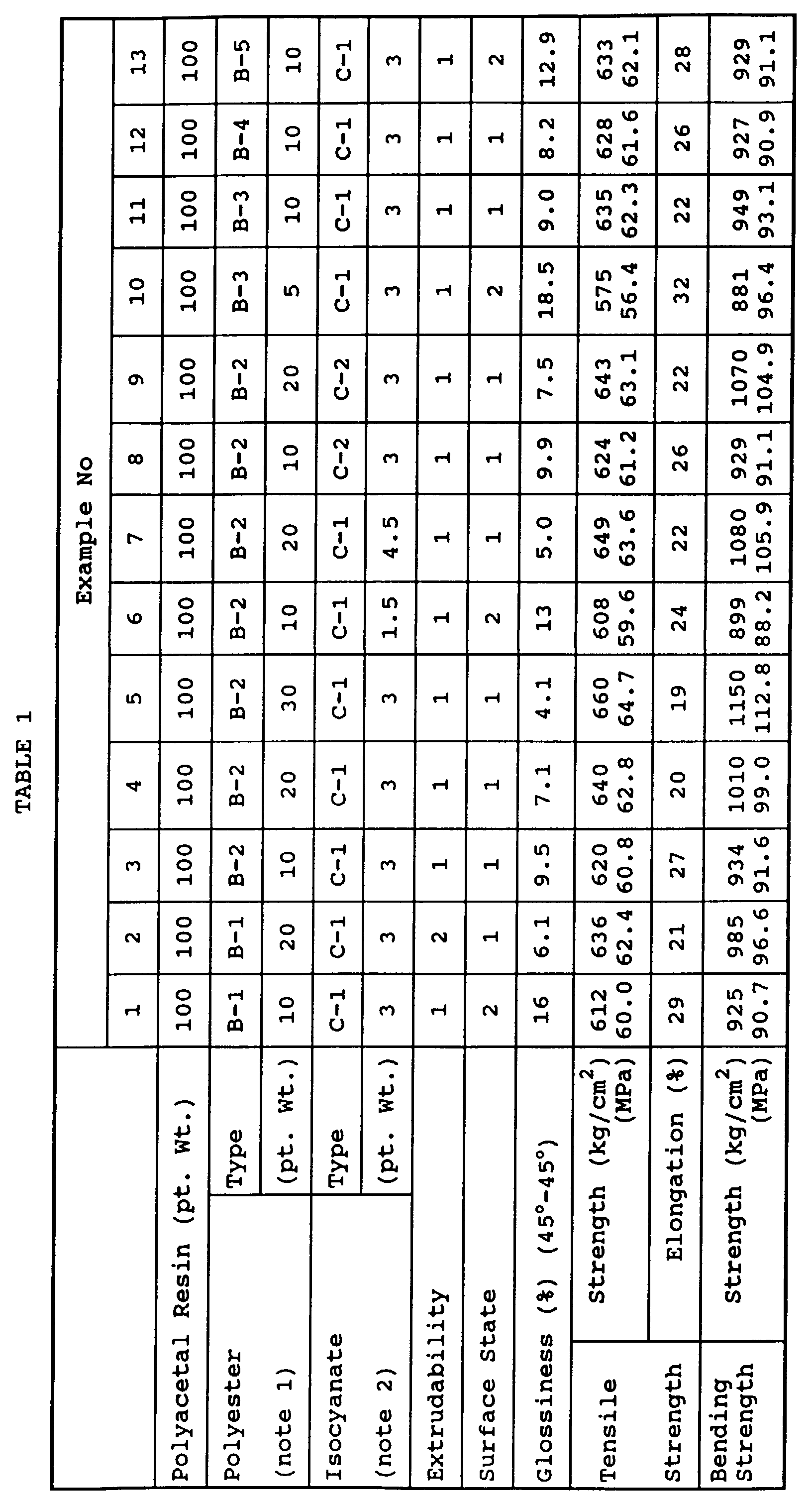

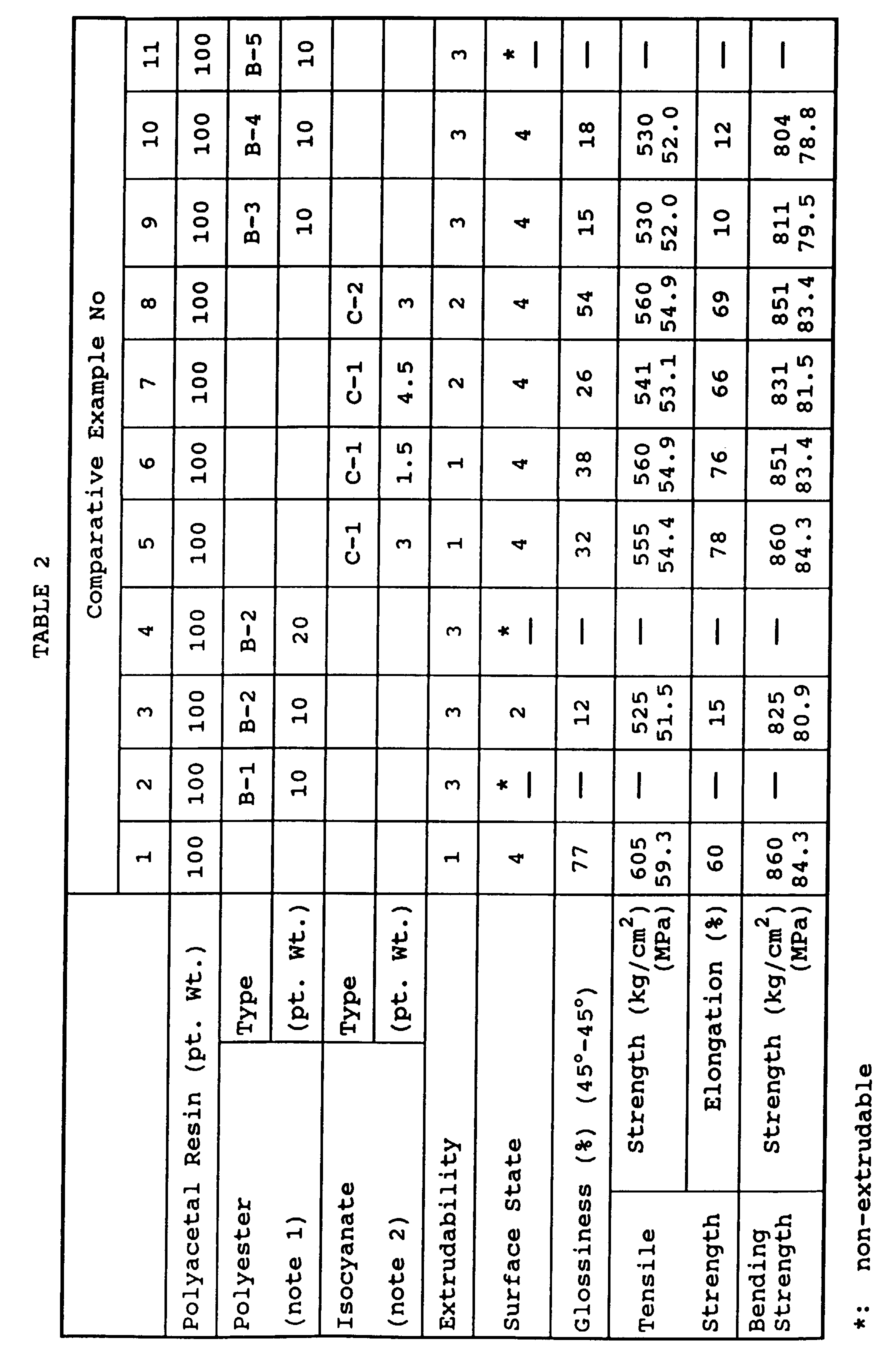

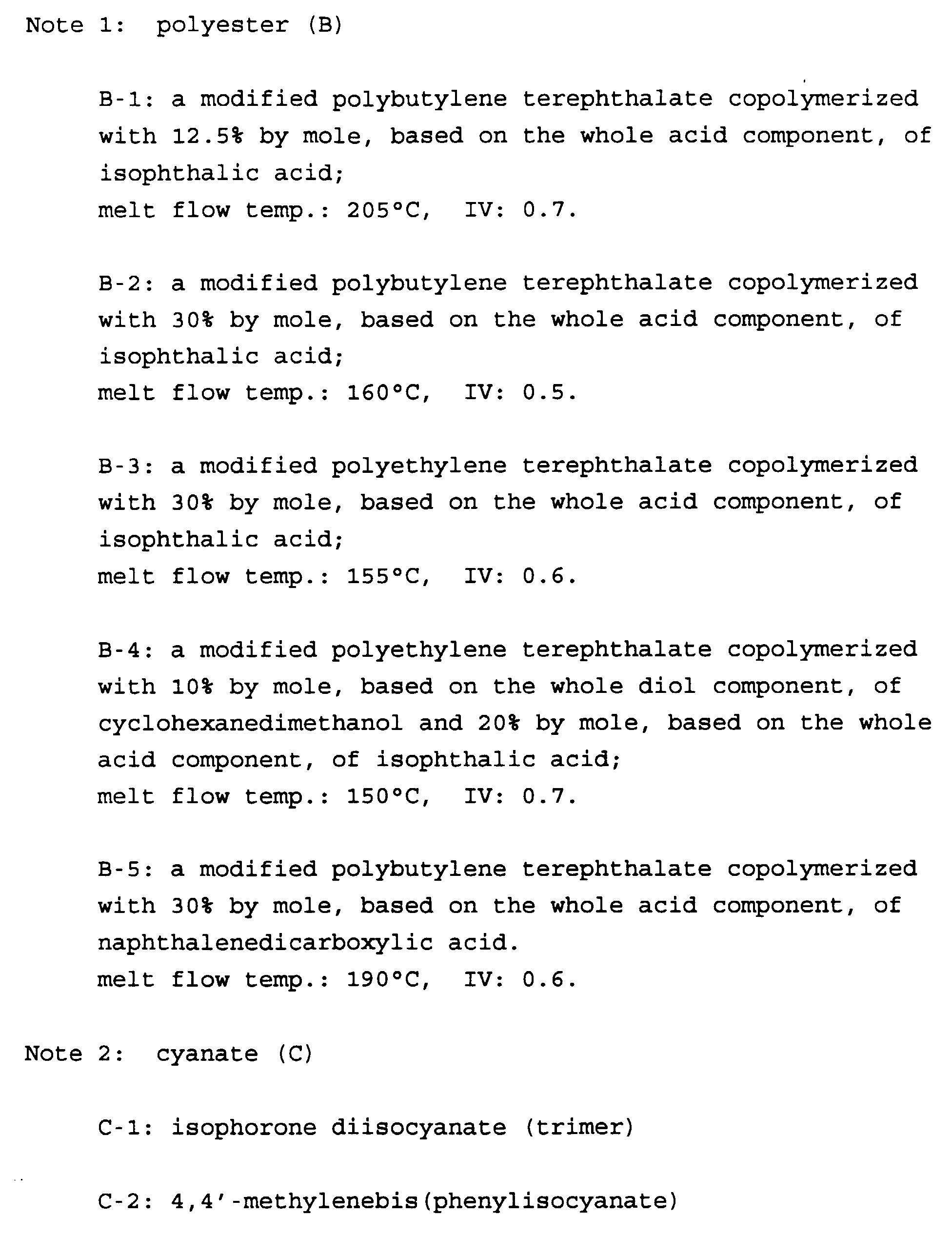

## Claims

1. A moldable polyacetal resin composition which when molded has a surface gloss of 20% or less (measured as described in the specification) and which comprises:
(A) 100 parts by weight of a polyacetal resin and, incorporated therein,
(B) 1 to 50 parts by weight of a polyalkylene terephthalate copolymer having a melt flow temperature of 210°C or below measured as herein specified, and
(C) 0.1 to 10 parts by weight of an isocyanate or isothiocyanate compound, or a derivative thereof which is active as a compatibilizer for components (A) and (B),
wherein the acid component constituting the polyalkylene terephthalate copolymer as the component (B) is composed of 100 to 50 mole % terephthalic acid and 0 to 50 mole % of at least one of isophthalic, naphthalenedicarboxylic and adipic acids, and
wherein the diol component constituting the polyalkylene terephthalate copolymer as the component (B) is 1,4-butanediol, or ethylene glycol, or wherein part of such 1,4-butanediol or ethylene glycol is replaced by at least one of ethylene glycol (when use is made of 1,4-butanediol), diethylene glycol and 1,4-cyclohexanedimethylol.

2. A polyacetal resin composition according to claim 1, wherein the polyalkylene terephthalate copolymer as the component (B) is a copolyester produced by copolymerizing an acid component comprising 90 to 60% by mole of terephthalic acid and 10 to 40% by mole of isophthalic acid with a diol component comprising 1,4-butanediol and/or ethylene glycol and further 1,4-cyclohexanedimethylol.

3. A polyacetal resin composition according to either preceding claim, wherein the component (C) is a diisocyanate or diisothiocyanate compound, or a dimer or trimer thereof.

4. A polyacetal resin composition according to claim, wherein the component (C) is a compound represented by the general formula O=C=N-R-N=C=O or S=C=N-R-N=C=S (wherein R represents a divalent group).

5. A polyacetal resin composition according to claim 3, wherein the isocyanate compound or the modification thereof as the component (C) is at least one member selected from the group consisting of 4,4'-methylenebis(phenylisocyanate), isophorone diisocyanate, 1,5-naphthalene diisocyanate, 1,6-hexamethylene diisocyanate, 2,4-tolylene diisocyanate, 2,6-tolylene diisocyanate, and dimers and trimers thereof.

6. A polyacetal resin composition according to any preceding claim, wherein the amount of the component (B) is 5 to 40 parts by weight and the amount of the component (C) is 0.3 to 5 parts by weight, both based on 100 parts by weight of the polyacetal resin.

7. A polyacetal resin molding having a surface gloss of 20% or less (measured as described in the specification) and produced by molding a composition according to any preceding claim.

## Patentansprüche

1. Formpreßbare Polyacetalharzzusammensetzung, die nach dem Formpressen einen (wie in der Beschreibung beschrieben gemessenen) Oberflächenglanz von 20% oder weniger besitzt und die
(A) 100 Gewichtsteile eines Polyacetalharzes und darin eingebaut
(B) 1 bis 50 Gewichtsteile eines Polyalkylenterephthalat-Copolymers mit einer Schmelzflußtemperatur, die so gemessen wird, wie es hierin angegeben ist, von 210°C oder darunter sowie
(C) 0,1 bis 10 Gewichtsteile einer Isocyanat- oder Isothiocyanatverbindung oder eines Derivats davon, die bzw. das als Kompatibilisator für die Komponenten (A) und (B) wirksam ist,
umfaßt, wobei die Säurekomponente, die das als Komponente (B) verwendete Polyalkylenterephthalat-Copolymer bildet, aus 100 bis 50 Mol-% Terephthalsäure und 0 bis 50 Mol-% wenigstens einer der Säuren Isophthal-, Naphthalindicarbon- und Adipinsäure besteht und
wobei es sich bei der Diolkomponente, die das als Komponente (B) verwendete Polyalkylenterephthalat-Copolymer bildet, um 1,4-Butandiol oder Ethylenglycol handelt oder wobei ein Teil dieses 1,4-Butandiols oder Ethylenglycols durch wenigstens eines der Diole Ethylenglycol (wenn 1,4-Butandiol verwendet wird), Diethylenglycol und 1,4-Cyclohexandimethylol ersetzt ist.

2. Polyacetalharzzusammensetzung gemäß Anspruch 1, wobei es sich bei dem als Komponente (B) verwendeten Polyalkylen' terephthalat-Copolymer um einen Copolyester handelt, der hergestellt wird, indem man eine Säurekomponente, die 90 bis 60 Mol-% Terephthalsäure und 10 bis 40 Mol-% Isophthalsäure umfaßt, mit einer Diolkomponente copolymerisiert, die 1,4-Butandiol und/oder Ethylenglycol sowie weiterhin 1,4-Cyclohexandimethylol umfaßt.

3. Polyacetalharzzusammensetzung gemäß einem der vorstehenden Ansprüche, wobei die Komponente (C) eine Diisocyanat- oder Diisothiocyanatverbindung oder ein Dimer oder Trimer davon ist.

4. Polyacetalharzzusammensetzung gemäß Anspruch 3, wobei die Komponente (C) eine Verbindung ist, die durch die allgemeine Formel O=C=N-R-N=C=O oder S=C=N-R-N=C=S dargestellt wird (wobei R eine zweiwertige Gruppe darstellt).

5. Polyacetalharzzusammensetzung gemäß Anspruch 3, wobei die als Komponente (C) verwendete Isocyanatverbindung oder das Derivat davon wenigstens ein Vertreter ist, der aus der Gruppe ausgewählt ist, die aus 4,4'-Methylenbis(phenylisocyanat), Isophorondiisocyanat, 1,5-Naphthalindiisocyanat, 1,6-Hexamethylendiisocyanat, 2,4-Toluylendiisocyanat, 2,6-Toluylendiisocyanat und Dimeren und Trimeren davon besteht.

6. Polyacetalharzzusammensetzung gemäß einem der vorstehenden Ansprüche, wobei die Menge der Komponente (B) 5 bis 40 Gewichtsteile beträgt und die Menge der Komponente (C) 0,3 bis 5 Gewichtsteile beträgt, beides bezogen auf 100 Gewichtsteile des Polyacetalharzes.

7. Polyacetalharz-Formkörper, der einen (wie in der Beschreibung beschrieben gemessenen) Oberflächenglanz von 20% oder weniger besitzt und durch Formpressen einer Zusammensetzung gemäß einem der vorstehenden Ansprüche hergestellt wird.

## Revendications

1. Une composition de résine polyacétal moulable qui a un brillant de surface de 20 % ou moins (mesuré comme décrit dans la description) après moulage et qui comprend :
(A) 100 parties en poids d'une résine polyacétal, et, à l'état incorporé dans celle-ci,
(B) 1 à 50 parties en poids d'un copolymère de polytéréphtalate d'alkylène ayant une température d'écoulement par fusion de 210°C ou moins, mesurée comme spécifié ici, et
(C) 0,1 à 10 parties en poids d'un isocyanate ou isothiocyanate, ou d'un dérivé de celui-ci, qui est actif comme agent de compatibilité pour les composants (A) et (B),
dans laquelle le composant acide qui constitue le copolymère de polytéréphtalate d'alkylène utilisé comme composant (B) est formé de 100 à 50 mol % d'acide téréphtalique et 0 à 50 mol % d'au moins l'un des acides isophtalique, naphtalènedicarboxylique et adipique, et
dans laquelle le composant diol qui constitue le copolymère de polytéréphtalate d'alkylène utilisé comme composant (B) est le 1,4-butanediol ou l'éthylène-glycol, ou dans laquelle une partie de ce 1,4-butanediol ou éthylène-glycol est remplacée par au moins l'un de l'éthylène-glycol (lorsqu'on utilise le 1,4-butanediol), du diéthylène-glycol et du 1,4-cyclohexanediméthylol.

2. Une composition de résine polyacétal selon la revendication 1, dans laquelle le copolymère de polytéréphtalate d'alkylène utilisé comme composant (B) est un copolyester produit par copolymérisation d'un composant acide comprenant 90 à 60 % en moles d'acide téréphtalique et 10 à 40 % en moles d'acide isophtalique avec un composant diol comprenant du 1,4-butanediol et/ou de l'éthylène-glycol et, de plus, du 1,4-cyclohexanediméthylol.

3. Une composition de résine polyacétal selon l'une ou l'autre des revendications précédentes, dans laquelle le composant (C) est un diisocyanate ou un diisothiocyanate, ou un dimère ou trimère de celui-ci.

4. Une composition de résine polyacétal selon la revendication 3, dans laquelle le composant (C) est un composé représenté par la formule générale O=C=N-R-N=C=O ou S=C=N-R-N=C=S (où R représente un groupe divalent).

5. Une composition de résine polyacétal selon la revendication 3, dans laquelle l'isocyanate ou son dérivé utilisé comme composant (C) est au moins un membre du groupe formé par le 4,4'-méthylènebis(isocyanate de phényle), le diisocyanate d'isophorone, le diisocyanate de 1,5-naphtylène, le diisocyanate de 1,6-hexaméthylène, le diisocyanate de 2,4-tolylène, le diisocyanate de 2,6-tolylène et leurs dimères et trimères.

6. Une composition de résine polyacétal selon l'une quelconque des revendications précédentes, dans laquelle la quantité du composant (B) est de 5 à 40 parties en poids et la quantité du composant (C) est de 0,3 à 5 parties en poids, dans les deux cas sur la base de 100 parties en poids de la résine polyacétal.

7. Un produit moulé en résine polyacétal ayant un brillant de surface de 20 % ou moins (mesuré comme décrit dans la description) et produit par moulage d'une composition selon l'une quelconque des revendications précédentes.
